# EUROPEAN PATENT SPECIFICATION

(11) **EP 1 315 556 B1**
(45) Date of publication and mention of the grant of the patent: **02.12.2009**
(21) Application number: 01963308.0
(22) Date of filing: 03.09.2001
(51) Int. Cl.: B01F 5/00

(54) **NUCLEAR REACTOR**
KERNREAKTOR
REACTEUR NUCLEAIRE

(30) Priority: 04.09.2000 ZA 200004635; 24.07.2001 ZA 200106068
(43) Date of publication of application: 04.06.2003
(73) Proprietor: Pebble Bed Modular Reactor (Proprietary) Limited, 0046 Centurion (ZA)
(72) Inventor: HAASBROEK, Andries Cornelius, 0084 Pretoria (ZA); FOX, Marius, 0154 Centurion (ZA); VENTER, Pieter Jacobus, 0157 Centurion (ZA)
(74) Representative: Khan, Mohammed Saiful Azam
(86) International application number: PCT/IB2001/001606
(87) International publication number: WO 2002/021537

(56) References cited:
- DE-B- 1 272 893
- US-A- 2 989 380
- US-A- 3 788 944
- US-A- 4 504 439

## Description

There is disclosed a method of mixing two fluid streams. It further relates to a mixing device. In addition, it relates to a nuclear power plant and to a method of removing heat generated in the core of the nuclear power plant.

In the specification, the word "recuperator" is to be given a wide meaning and includes a heat transfer means which enables a hot fluid leaving a reactor vessel, or the like, to be utilised in heating incoming fluid for the reactor vessel, the outgoing hot fluid and incoming colder fluid passing through respective hot and cold sides in which outgoing and return fluid flow paths are defined in the heat transfer means and heat being transferred therebetween. The word recuperator-like is to be given a corresponding meaning.

There is disclosed a method of mixing fluid streams which includes feeding the streams into a spherical mixing chamber from angularly spaced positions.

There is disclosed a method of mixing two fluid streams which includes feeding the two fluid streams to be mixed into a mixing chamber so that the streams enter the chamber at right angles to one another.

The method may include extracting the mixture from the mixing chamber from a position which is angularly spaced from at least one of the inlet streams.

The streams may be of gas, typically helium, at different temperatures, the hotter stream being fed into the mixing chamber through a hot inlet, the cooler stream being fed into the mixing chamber through a cold inlet and the mixture being exhausted from the mixing chamber through an outlet.

The method may include feeding the cooler stream into the mixing chamber and exhausting the mixture from the mixing chamber at diametrically opposed positions.

There is disclosed a mixing device which includes
a mixing chamber;
at least two inlets leading into the mixing chamber at angularly spaced positions; and
an outlet leading from the mixing chamber, the mixing chamber being generally spherical in shape.

There is disclosed a mixing device which includes
a mixing chamber;
at least two inlets leading into the mixing chamber at angularly spaced positions; and
an outlet leading from the mixing chamber, the inlets being directed towards the centre of the mixing chamber.

The mixing device may include a first inlet and a second inlet which are perpendicular to one another, the outlet being positioned opposite one of the inlets.

A method according to the invention is provided in claim 6.

The Applicant is aware of a nuclear power plant having a high temperature gas cooled reactor which plant makes use of a thermodynamic conversion cycle based on the Brayton cycle. The Applicant believes that the invention will find application particularly in a plant of this type to remove decay heat when the Brayton cycle is not operational.

The method may include limiting the temperature of the coolant, typically helium, to the hot side of the recuperator to a predetermined maximum temperature.

Limiting the temperature of coolant being fed to the hot side of the recuperator may include mixing hot coolant from the reactor with cold coolant prior to feeding the mixture into the hot side of the recuperator.

The method may include mixing the hot coolant and the cold coolant in a mixing device of the type described above, the outlet of which is connected to the hot side inlet of the recuperator.

There is provided a core conditioning system according to claim 1. There is also provided a nuclear power plant comprising the core conditioning system.

The system/plant may include a mixing device positioned upstream of the hot side of the recuperator whereby hot coolant from the reactor can be mixed with cold coolant, typically from the second heat exchanger, before being fed into the recuperator. In this way, the maximum temperature of the coolant being fed into the recuperator can be regulated.

The mixing device may be a mixing device as described above, a first inlet of the mixing device being connected to the outlet of the reactor, the outlet of the mixing device being connected to the hot inlet of the recuperator and a second inlet of the mixing device being connected or connectable to the outlet of the second heat exchanger, the core conditioning system including valving to regulate the flow of coolant from the outlet of the second heat exchanger to the mixing device. This permits the ratio of hot and cold coolant and hence the temperature of the coolant exiting the mixing device and entering the hot side of the recuperator to be controlled.

The core conditioning system may include at least two sets of heat exchangers connected in parallel. A blower may be associated with the or each set of heat exchangers. Each set of heat exchangers will typically be capable of removing the decay heat from the reactor on its own thereby improving safety and facilitating maintenance.

The nuclear reactor may, as mentioned above, be of a high temperature gas cooled type. In particular, the nuclear reactor may be a reactor known as a Pebble Bed Reactor in which a fuel, comprising a plurality of spherical fuel elements, is used. The fuel elements may comprise spheres of fissionable material and a ceramic matrix, or encapsulated in the ceramic material. The reactor may be helium cooled. The reactor may generate heat energy by means of a controlled nuclear fission process and convert heat energy into electrical energy utilising a thermodynamic process based on a Brayton direct gas cycle. Then, the reactor may utilise substantially pure helium gas as a working fluid. It will be appreciated that the working fluid will then also comprise the coolant fluid.

In a preferred embodiment of the invention the recuperator is a gas-to- gas heat exchanger. The recuperator may be a plate compact fin heat exchanger, of a known type.

The second heat exchanger may be a tube heat exchanger and may be water cooled.

The helium blower may be supported on magnetic bearings and may be driven by an electric motor.

The, core conditioning system, and more particularly the hot inlet of the recuperator, may be connected to the outlet of the reactor by means of an outlet gas flow duct in which the mixing chamber is mounted. The hot outlet of the recuperator may be connected to a gas inlet of the second heat exchanger by means of a first intermediate gas flow duct. The cold inlet of the recuperator may be connected to a gas outlet of the second heat exchanger by means of a second intermediate gas flow duct. The cold outlet of the recuperator may be connected to an inlet of the reactor by means of an inlet gas flow duct. Then a normal gas flow path may be defined from the outlet to the inlet of the reactor by means of the outlet gas flow duct via the hot side of the recuperator to the first intermediate gas flow duct via the second heat exchanger to the second intermediate gas flow duct and via the cold side of the recuperator to the inlet gas flow duct and inlet of the reactor.

An inlet valve may be arranged on the second intermediate gas flow duct for controlling gas flow between the second heat exchanger and the cold inlet of the recuperator. A branch flow duct may be arranged intermediate the second intermediate gas flow duct and the inlet gas flow duct and a first by-pass valve may be arranged thereon. Where the plant includes a mixing device, the branch flow duct may be connected to a second inlet of the mixing device. Then, by means of the first by-pass valve of the branch flow duct, cooler gas may be mixed in the mixing chamber with hot gas from the hot plenum of the reactor entering the mixing chamber of the mixing device to provide gas of a predetermined temperature to the hot inlet of the recuperator. A by-pass duct may be arranged intermediate the branch flow duct and the inlet gas flow duct and may have a second by-pass valve arranged thereon. It will be appreciated that by manipulation of the inlet valve and the first and second by-pass valves, cool gas from the outlet of the second water cooled heat exchanger may be diverted directly to the inlet gas flow duct and directed to the cold plenum of the reactor, thereby effectively bypassing the return flow path of the recuperator.

In use, hot core gas is extracted from the hot plenum in the core of the nuclear reactor and transported to the hot inlet of the recuperator. Before it enters the recuperator, the gas is mixed in the mixing chamber with a portion of cold gas leaving the second heat exchanger. This is done to ensure that the gas temperature entering the recuperator never exceeds the maximum temperature limits of the recuperator, typically 900°C. In the recuperator, the helium temperature is reduced further before it enters the second heat exchanger. Heat is removed from the system in the second heat exchanger. Cold helium leaving the second heat exchanger then enters the blower and continues to the cold inlet of the recuperator. If desired, a portion of the cool gas is diverted to the mixing device and mixed with hot gas entering the mixing chamber, as described above. The remaining gas stream then enters the cold inlet of the recuperator where its temperature is increased by heat transfer from the hot inlet gas flowing through the hot side of the recuperator. The heated gas stream, the temperature of which is nevertheless lower than that of the gas exiting the reactor pressure vessel via the outlet, is transported to the reactor cold plenum via the reactor inlet.

The invention will now be described, by way of example, with reference to the accompanying diagrammatic drawings.

In the drawings,
Figure 1 shows a schematic representation of a power generating circuit of a nuclear power plant in accordance with the invention;
Figure 2 shows a schematic representation of a core conditioning system forming part of the nuclear power plant;
Figure 3 shows schematically a mixing device in accordance with the invention which forms part of the core conditioning system of Figure 2; and
Figure 4 shows a representation, similar to Figure 2 of another core conditioning system in accordance with the invention.

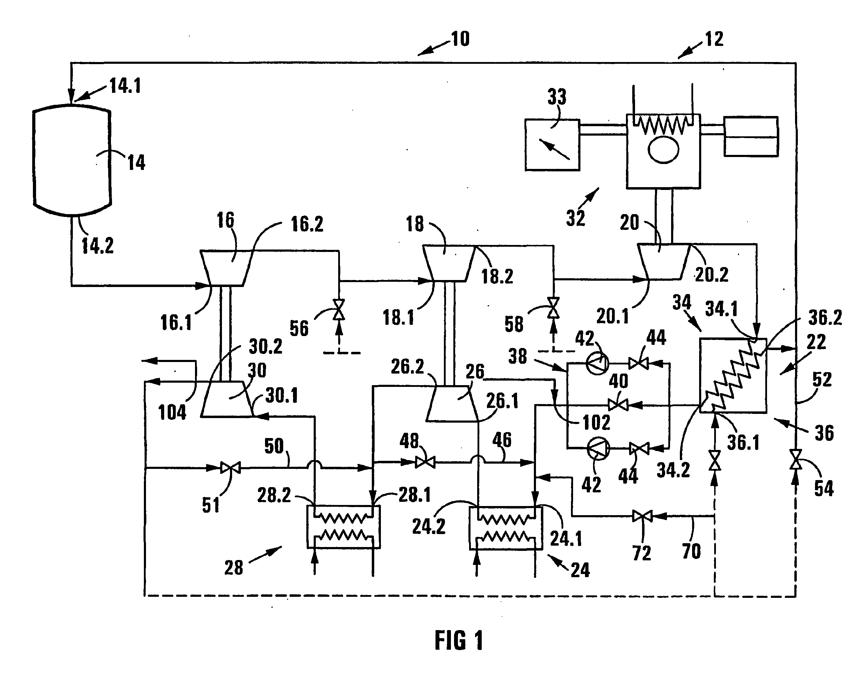

In Figure 1 of the drawings, reference numeral 10 refers generally to part of a nuclear power plant in accordance with the invention.

The nuclear power plant 10 includes a closed loop power generation circuit, generally indicated by reference numeral 12. The power generation circuit 12 includes a nuclear reactor 14, a high pressure turbine 16, a low pressure turbine 18, a power turbine 20, a recuperator 22, a pre-cooler 24, a low pressure compressor 26, an inter-cooler 28 and a high pressure compressor 30.

The reactor 14 is a pebble bed reactor making use of spherical fuel elements. The reactor 14 has an inlet 14.1 and an outlet 14.2.

The high pressure turbine 16 is drivingly connected to the high pressure compressor 30 and has an upstream side or inlet 16.1 and a downstream side or outlet 16.2, the inlet 16.1 being connected to the outlet 14.2 of the reactor 14.

The low pressure turbine 18 is drivingly connected to the low pressure compressor 26 and has an upstream side or inlet 18.1 and a downstream side or outlet 18.2. The inlet 18.1 is connected to the outlet 16.2 of the high pressure turbine 16.

The nuclear power plant 10 includes a generator, generally indicated by reference numeral 32 to which the power turbine 20 is drivingly connected. The power turbine 20 includes an upstream side or inlet 20.1 and a downstream side or outlet 20.2. The inlet 20.1 of the power turbine 20 is connected to the outlet 18.2 of the low pressure turbine 18.

A variable resistor bank 33 is disconnectably connectable to the generator 32.

The recuperator 22 has a hot or low pressure side 34 and a cold or high pressure side 36. The low pressure side of the recuperator 34 has an inlet 34.1 and an outlet 34.2. The inlet 34.1 of the low pressure side is connected to the outlet 20.2 of the power turbine 20.

The pre-cooler 24 is a water to helium heat exchanger and includes a helium inlet 24.1 and a helium outlet 24.2. The inlet 24.1 of the pre-cooler 24 is connected to the outlet 34.2 of the low pressure side 34 of the recuperator 22.

The low pressure compressor 26 has an upstream side or inlet 26.1 and a downstream side or outlet 26.2. The inlet 26.1 of the low pressure compressor 26 is connected to the helium outlet 24.2 of the pre-cooler 24.

The inter-cooler 28 is a helium to water heat exchanger and includes a helium inlet 28.1 and a helium outlet 28.2. The helium inlet 28.1 is connected to the outlet 26.2 of the low pressure compressor 26.

The high pressure compressor 30 includes an upstream side or inlet 30.1 and a downstream side or outlet 30.2. The inlet 30.1 of the high pressure compressor 30 is connected to the helium outlet 28.2 of the inter-cooler 28. The outlet 30.2 of the high pressure compressor 30 is connected to an inlet 36.1 of the high pressure side of the recuperator 22. An outlet 36.2 of the high pressure side of the recuperator 22 is connected to the inlet 14.1 of the reactor 14.

The nuclear power plant 10 includes a start-up blower system generally indicated by reference numeral 38 connected between the outlet 34.2 of the low pressure side 34 of the recuperator 22 and the inlet 24.1 of the pre-cooler 24.

The start-up blower system 38 includes a normally open start-up blower system in-line valve 40 which is connected in-line between the outlet 34.2 of the low pressure side of the recuperator and the inlet 24.1 of the pre-cooler 24. Two blowers 42 are connected in parallel with the start-up blower system in-line valve 40 and a normally closed isolation valve 44 is associated with and connected in series with each blower 42.

A low pressure compressor bypass line 46 extends from a position between the outlet or downstream side 26.2 of the low pressure compressor 26 and the inlet 28.1 of the inter-cooler 28 to a position between the start-up blower system 38 and the inlet 24.1 of the pre-cooler 24. A normally closed low pressure bypass valve 48 is mounted in the low pressure compressor bypass line 46.

A high pressure compressor bypass line 50 extends from a position between the outlet or downstream side 30.2 of the high pressure compressor and the inlet 36.1 of the high pressure side 36 of the recuperator 22 to a position between the outlet or downstream side 26.2 of the low pressure compressor 26 and the inlet 28.1 of the inter-cooler 28. A normally closed high pressure bypass valve 51 is mounted in the high pressure compressor bypass line 50.

A recuperator bypass line 52 extends from a position upstream of the inlet 36.1 of the high pressure side 36 of the recuperator 22 to a position downstream of the outlet 36.2 of the high pressure side 36 of the recuperator 22. A normally closed recuperator bypass valve 54 is mounted in the recuperator bypass line 52.

The plant 10 includes a high pressure coolant valve 56 and a low pressure coolant valve 58. The high pressure coolant valve 56 is configured, when open, to provide a bypass of helium from the high pressure side or outlet 30.2 of the high pressure compressor 30 to the inlet or low pressure side 18.1 of the low pressure turbine 18. The low pressure coolant valve 58 is configured, when open, to provide a bypass of helium from the high pressure side or outlet 30.2 of the high pressure compressor 30 to the inlet 20.1 of the power turbine 20.

In normal operation of the Bryaton cycle, heat generated in the reactor 14 is dissipated in the power generation circuit 12.

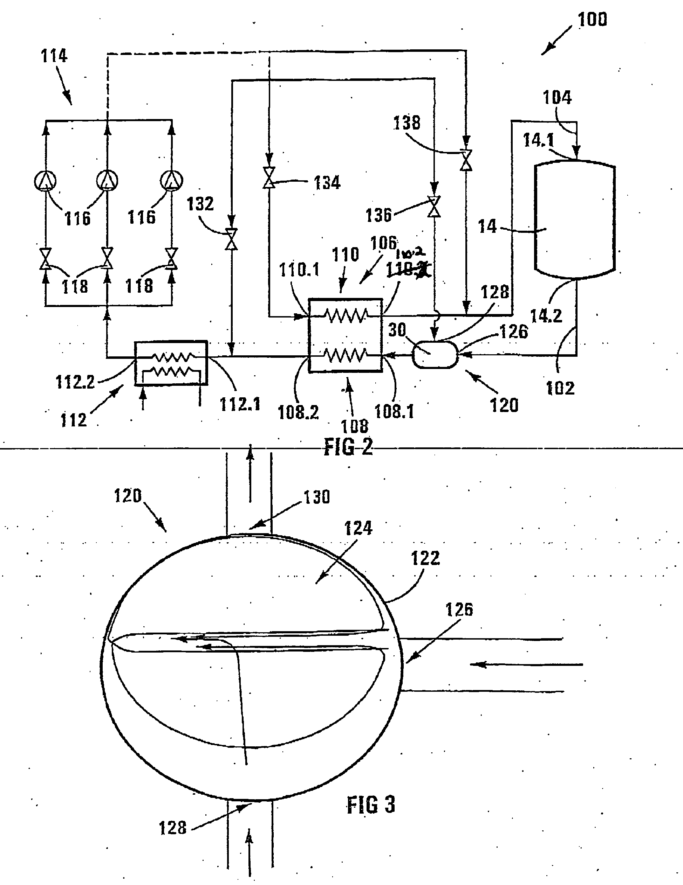

The plant 10 also includes a core conditioning system, generally indicated by reference numeral 100 (Figure 2) connected in series with the reactor 14. The core conditioning system is connected to an outlet 14.2 via a hot feed pipe or outlet gas flow duct 102 and to an inlet of the reactor via a cold return pipe 104 or inlet flow duct. The hot feed pipe 102 is connected at an upstream end thereof, to a core outlet plenum and the cold return pipe 104 is connected, at a downstream end thereof, to a core inlet plenum (not shown in Figure 1).

The core conditioning system 100 includes a gas-to-gas heat exchanger or recuperator 106 which has a hot side 108 and a cold side 110. The hot side has an inlet 108.1 and an outlet 108.2. Similarly, the cold side 110 has an inlet 110.1 and an outlet 110.2.

The core conditioning system 100 further includes a water-to-gas heat exchanger 112 having a gas inlet 112.1 and a gas outlet 112.2.

The core conditioning system 100 includes a blower arrangement, generally indicated by reference numeral 114. The blower arrangement 114 includes three blowers 116 which are connected in parallel and a blower isolation valve 118 connected in series with each of the blowers 116. The core conditioning system 100 further includes a mixing device 120. As can best be seen in Figure 3 of the drawings, the mixing device 120 includes a body 122 which defines a spherical mixing chamber 124. A hot inlet 126 leads into the mixing chamber 124 and is connected to a feed pipe 102 or outlet gas flow duct. A cold inlet 128 leads into the mixing chamber 124 at a position which is at 90° to the hot inlet 126. An outlet 130 leads from the mixing chamber 124 and is connected to the inlet 108.1 of the hot side 108 of the recuperator 106.

The core conditioning system 100 further includes a blower bypass valve 132, a flow valve 134, a mixing valve 136 and a recuperator bypass valve 138.

The purpose of the core conditioning system is to remove decay heat from the reactor when the reactor is shut down and the Brayton cycle is not operational. In the event of a trip of the power generation circuit, the core conditioning system serves to cool the reactor down to a temperature that will allow a restart. In a restart the start-up blower system 38 provides the required core mass flow to remove the core fission heat.

The function of the core conditioning system recuperator 106 is to ensure that the temperature of the returning gas to the reactor does not decrease below acceptable limits. At the same time, it reduces the inlet temperature to the heat exchanger 112. The mixing device 120 is provided to limit the temperature of gas being fed to the inlet 108.1 of the hot side 108 of the recuperator 106 so that it does not exceed a predetermined maximum temperature, typically 900°C.

To this end, the hot gas from the reactor is fed into the mixing chamber 124 through the hot inlet 126. Depending upon the temperature of the hot gas, already cooled gas is fed through the cold inlet 1 28 into the mixing chamber 124 where it mixes with the hot gas and is exhausted through the outlet 130 from where it is fed to the hot side of the recuperator.

As can best be seen in Figure 3 of the drawings, the inlets 126 and 128 are directed towards the centre of the spherical mixing chamber 124 and are mutually perpendicular. The outlet 130 is positioned diametrically opposite to the cold inlet 128. The Inventors believe that the stream of cold gas which is fed into the mixing chamber 124 will penetrate the hot stream. When the combined stream hits the opposite wall of the mixing chamber 124 a swirling motion is induced which results in efficient mixing with very low stratification levels. Naturally, the diameters of the inlet 128 and the outlet 130 can be altered, thereby to alter the velocity of the gas streams being fed into the mixing chamber and hence the momentum thereof to change the level of penetration between the cold gas and hot gas and thereby optimise the mixing process.

The core conditioning system 100 is preferably housed in a pressure vessel (not shown).

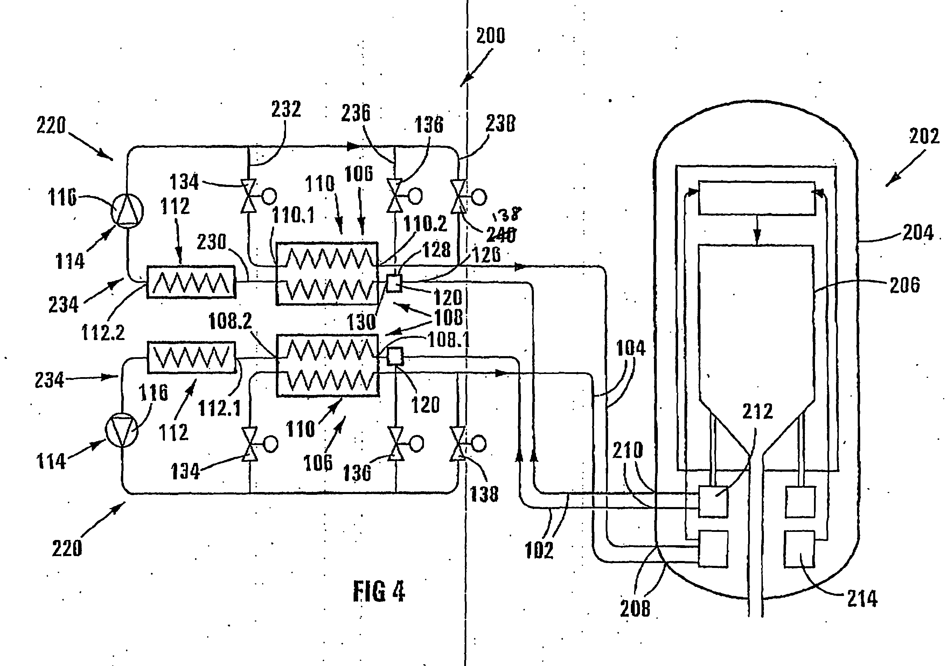

Reference is now made to Figure 4 of the drawings in which, unless otherwise indicated, the same reference numerals used above are used to designate similar parts.

In the drawing, reference numeral 200 generally refers to another core cooling system or core conditioning system in accordance with the invention.

The core conditioning system 200 is connected to a nuclear reactor 202 which is a high temperature gas cooled reactor and is of a type known as a Pebble Bed Reactor in which a fuel comprising a plurality of spherical fuel elements (not shown) is used. The fuel elements comprise spheres of a fissionable material in a ceramic matrix, encapsulated in the ceramic material. The reactor is helium cooled. The reactor generates thermal power by means of a controlled nuclear fission process and converts heat energy into electrical energy utilising a thermodynamic process based on a Brayton direct gas cycle. The reactor utilises substantially pure helium gas as a working fluid, which also comprises the coolant fluid (not shown) for the reactor core.

The reactor 202 has a reactor pressure vessel 204 containing a reactor core 206 cooled by helium gas. The reactor vessel 204 has inlets 208 and outlets 210. The outlets 210 of the reactor vessel 204 are in fluid communication with a hot plenum 212 of the reactor core 206. The inlets 208 of the reactor vessel 204 are in fluid communication with a cold plenum 214 of the reactor core 206.

In order to provide for maintenance and for safety considerations, the core conditioning system 200, which is typically housed in a pressure vessel (not shown), has two sets 220 of heat exchangers. Each set 220 is similar to the heat exchangers of the system 100 and has a recuperator 106 having an inlet 108.1, an outlet 108.2, an inlet 110.1 and an outlet 110.2. The inlet 108.1 is connected to the outlet 210 via an outlet flow duct 102 and the outlet 110.2 is connected to the inlet 208 via an inlet flow duct 104. Each recuperator 106 is a multi-tube gas heat exchanger.

Further, each set 220 has a second heat exchanger 112 operatively connected to its associated recuperator 106 intermediate the inlet 110.1 and outlet 108.2 thereof. The second heat exchanger 112 is a printed circuit heat exchanger and is water cooled.

Still further, each set 220 includes a gas mixing device 120 intermediate the outlet 210 and the inlet 108.1 of the recuperator 106.

Each set 220 also has a helium blower 116 for driving helium gas through the heat exchangers 106 and 112. The blower 116 is supported on magnetic bearings (not shown) and is driven by an electric motor.

In each set 220 the outlet 108.2 of the recuperator 106 is connected to a gas inlet 112.2 of its associated second heat exchanger 112 by means of a first intermediate gas flow duct 230. The inlet 110.1 of the recuperator 106 is connected to a gas outlet 112.2 of the second heat exchanger 112 by means of a second intermediate gas flow duct 232. Thus, under normal operation, a gas flow path 234 is defined from the outlet 210 to the inlet 208 by means of the outlet flow duct 102 via the recuperator 106 to the first intermediate gas flow duct 230 via the second heat exchanger 112 to the second intermediate gas flow duct 232 and again via the recuperator 106 to the inlet flow duct 104 and inlet 210.

An inlet valve 134 is arranged on the second intermediate gas flow duct 232 for controlling gas flow between the second heat exchanger 112 and the inlet 110.1 of the recuperator 106. A branch flow duct 236 is arranged intermediate the second intermediate gas flow duct 232 and the outlet flow duct 104 and a first by-pass valve 136 is arranged thereon. The branch flow duct 236 is connected to the inlet 128 of the mixing device 120 and the outlet 210 is connected to the inlet 126 of the mixing device 120 via the outlet flow duct 102. An outlet 130 of the mixing device 120 is connected to the inlet 108.1 of the recuperator 106. Then, by means of the first by-pass valve 136 of the branch flow duct 236, cooler gas may be mixed in the device 120 with hot gas from the hot plenum 212 of the reactor 206 entering the mixing device 120 to provide gas of a predetermined temperature to the inlet 108.1 of the recuperator 106. A by-pass duct 238 is arranged intermediate the branch flow duct 236 and the inlet gas flow duct 104 and has a second by-pass valve 138 arranged thereon. By manipulation of the inlet valve 134 and the first and second by-pass valves 136, 138 cool gas from the outlet 112.2 of the second water cooled heat exchanger 112 may be diverted directly to the inlet flow duct 104 and directed to the cold plenum 214 of the reactor 206, thereby effectively bypassing the return flow path of the recuperator 106.

In use, hot core gas is extracted from the hot plenum 212 in the core 206 of the nuclear reactor 202 and transported to the inlet 108.1 of the recuperator 106. Before it enters the recuperator 106 it is mixed in the mixing device 120 with cold gas leaving the water cooler 112. This is done to ensure that the gas temperature entering the recuperator 106 never exceeds the maximum temperature limits of the recuperator 106. In the recuperator 106 the helium temperature is reduced further before it enters the water cooler 112. Heat is removed from the system in the water cooler 112. Cold helium leaving the water cooler 112 then enters the blower 116 and continues to the inlet 110.1 of the recuperator 106. A portion of the cool gas is diverted to the mixing device 120 and mixed with hot gas entering the mixing device 120, as described above. The remaining gas stream then enters the inlet 110.1 of the recuperator 20 where its temperature is increased by heat transfer from the hot gas flowing through the hot side 108 of the recuperator 106. The heated gas stream, the temperature of which is nevertheless lower than that of the gas exiting the reactor pressure vessel 204 via the outlet 210, is transported to the reactor cold plenum 214 via the reactor vessel inlet 208.

In use, the gas mixing device 120 limits the incoming gas temperature to the recuperator 106. The recuperator 106 controls the temperature differential across the reactor core 206 and also reduces the gas temperature entering the water cooled heat exchangers 112. Thus, the temperature of the helium gas may be reduced to a temperature at which known standard water cooled heat exchangers 112 may be used. The blower 116 provides the necessary helium mass flow. The core conditioning system pressure vessel (not shown) is preferably coupled directly to the primary pressure boundary of the reactor pressure vessel 204 and its operating pressure is therefore intended to follow that of the primary system.

In use, the core conditioning system 100, 200 removes core decay heat when the Brayton cycle is not in use and removes core fission heat during start-up operations. Thus, should the power generation circuit (shown in Figure 1) trip, the average helium temperature at the reactor outlet may be reduced to a level that will allow the restart of the Brayton cycle. Further, during maintenance shutdown, the average helium temperature at the reactor outlet may be reduced to a level that will allow maintenance operations to take place. Still further, the core conditioning systems 100, 200 will control the rate at which core fission heat is removed from the core 14, 206 of the reactor and allow controlled heat-up of the reactor core. The conditioning system 100, 200 may also be used to permit the increase of the outlet helium temperature to a level at which the Brayton cycle can be initiated.

In a proposed embodiment of a Pebble Bed nuclear reactor, helium gas in the core and at the outlet of the reactor may be at a temperature of about 900°C. Before the gas enters the recuperator 106 if necessary it is cooled to about 900°C by mixing with the cool gas stream. In the recuperator 106, the gas is cooled to less than 550°C. This enables the use of available industrial blowers 116 and water cooled heat exchangers 112. The gas then enters the water cooler 112 where heat is extracted from the gas and it is cooled to a maximum temperature of about 350°C. On re-entering the recuperator 106, the gas is heated before entering the inlet of the reactor so that a desired ratio of inlet to outlet temperatures in the reactor core may be maintained while the core is gradually cooled. Once the core temperature has dropped to a point where the recuperator 106 is not effective, the recuperator 106 may be removed from the gas flow path, as described above, and further cooling above, and further cooling may be provided by the water cooled heat exchanger 112, if it is required to cool the core completely.

By means of the invention, there is provided a nuclear reactor and a nuclear reactor cooling or core conditioning system 100, 200 that allows for the controlled cooling of the reactor core for maintenance. Further, where a Brayton direct gas thermodynamic cycle is used, the conditioning system 100, 200 provides for control of the temperature of the helium working fluid in order to initiate the Brayton cycle.

## Claims

1. A core conditioning system (100) arranged to remove decay heat generated in the core of a nuclear reactor (14) and arranged to be connectable in series with it the core conditioning system (100) **characterised by** including at least one recuperator (106) having a hot side (108) which has an inlet (108.1) and an outlet (108.2) and a cold side (110) which has an inlet (110.1) and an outlet (110.2),the hot side inlet (108.1) being in fluid communication with an outlet(14.2) of the reactor (14) and the cold side outlet (1102) being in fluid communication with an inlet (14.1) of the reactor (14), and a heat exchanger (112) operatively connected to the recuperator intermediate the hot side outlet (108.2) and the cold side inlet (110.1).

2. A core conditioning system as claimed in claim 1, further including a mixing device (30) positioned upstream of the hot side (108) of the recuperator (106) whereby hot coolant from the reactor can be mixed with cold coolant, before being fed to the recuperator (106).

3. A core conditioning system as claimed in claim 2, in which the mixing device comprises:
a mixing chamber (124) which is generally spherical in shape
a first inlet (126) connected to the outlet (14.2) of the reactor (14), and second inlet (126) connected to an outlet (112.2) of the heat exchanger (112) leading into the mixing chamber (124), the first and second (126, 128) inlets being perpendicular to one another, and an outlet (130) leading from the mixing chamber (124) and being connected to the hot side inlet (108.1) of the recuperator (106), the inlets (126, 128) being directed towards the centre of the mixing chamber and the outlet (130) being positioned opposite one of the inlets (126,128)
the core conditioning system (100) including valving to regulate the flow of coolant from the outlet of the heat exchanger (112) to the mixing device (30).

4. A core conditioning system as claimed in any of claims 1 to 3, in which the core conditioning system includes at least two sets (220) of heat exchangers connected in parallel.

5. A nuclear power plant comprising a nuclear reactor and a core conditioning system according to any of claims 1 to 4 connected in series with it.

6. A method of removing decay heat generated in the core of the nuclear reactor(14), which method includes the steps of
- connecting a core conditioning system (100) as claimed in any one of claims 1 to 4 ; and
- circulating coolant between the reactor (14) and the core conditioning system (100).

7. A method as claimed in claim 6, which includes limiting the temperature of the coolant fed to the hot side (108) of the recuperator (106) to a predetermined maximum temperature.

8. A method as claimed in claim 7, in which limiting the temperature of coolant being fed to the hot side of the recuperator includes mixing hot coolant from the reactor (14) with cold coolant prior to feeding the mixture into the hot side (108) of the recuperator (106).

9. A method as claimed in claim 8, which includes mixing the hot coolant and the cold coolant in a mixing device (30) the mixing device (30) comprising:
a mixing chamber (124) which is generally spherical in shape; and
a first inlet (126) connected to the outlet (14.2) of the reactor (14), and a second inlet (128) connected to an outlet (112.2) of the heat exchanger (112) leading into the mixing chamber (124), the first and second (126, 128) inlets being perpendicular to one another, and an outlet (130) leading from the mixing chamber (124) and being connected to the hot side inlet (108.1) of the recuperator (108), the inlets (126, 126) being directed towards the centre of the mixing chamber and the outlet (130) being positioned opposite one of the inlets (126, 128).

## Patentansprüche

1. Kernkühlsystem (100), welches zum Entfernen von in einem Kern eines Kernreaktors (14) gebildeter Zerfallswärme und zur Verbindung in Reihe damit angeordnet ist, wobei das Kernkühlsystem (100) **dadurch gekennzeichnet ist, dass** es wenigstens einen Rekuperator (106) mit einer heißen Seite (108) besitzt, die einen Einlass (108.1) und einen Auslass (108.2) aufweist und eine kalte Seite (110) besitzt, die einen Einlass (110.1) und einen Auslass (110.2) aufweist, wobei sich der Einlass (108.1) der heißen Seite mit einem Auslass (14.2) des Reaktors (14) in Fluidkommunikation befindet und sich der Auslass (110.2) der kalten Seite mit einem Einlass (14.1) des Reaktors (14) in Fluidkommunikation befindet und ein Wärmeübertrager (112) mit dem Rekuperator zwischen dem Auslass (108.2) der heißen Seite und dem Einlass (110.1) der kalten Seite operativ verbunden ist.

2. Kernkühlsystem nach Anspruch 1, weiterhin mit einer stromaufwärts der heißen Seite (108) des Rekuperators (106) angeordneten Mischvorrichtung (30), mit der heißes Kühlmittel aus dem Reaktor mit kalten Kühlmittel gemischt werden kann, bevor es dem Rekuperator (106) zugeführt wird.

3. Kernkühlsystem nach Anspruch 2, wobei die Mischvorrichtung aufweist:
eine Mischkammer (124), die von allgemein kugelförmiger Form ist, mit
einem ersten Einlass (126), der mit dem Auslass (14.2) des Reaktors (14) verbunden ist und einem zweiten Einlass (128), der mit einem Auslass (112.2) des Wärmeübertragers (112) verbunden ist, der in die Mischkammer (124) führt, die ersten und zweiten (126, 128) Einlässe rechtwinklig zueinander angeordnet sind und einem Auslass (130), der von der Mischkammer (124) wegführt und mit dem Einlass (108.1) der heißen Seite des Rekuperators (106) verbunden ist, wobei die Einlässe (126, 128) zu der Mitte der Mischkammer hin ausgerichtet sind und der Auslass (130) einem der Einlässe (126, 128) gegenüberliegend angeordnet ist und
das Kernkühlsystem (100) eine Ventileinrichtung zur Regelung des Kühlmittelstroms vom Auslass des Wärmeübertragers (112) zu der Mischvorrichtung (30) aufweist.

4. Kernkühlsystem nach einem der Ansprüche 1 bis 3, wobei das Kernkühlsystem wenigstens zwei Sätze (22) parallel angeschlossener Wärmeübertrager aufweist.

5. Kernkraftwerk mit einem Kernreaktor und einem in Reihe damit angeordneten Kernkühlsystem nach einem der Ansprüche 1 bis 4.

6. Verfahren zum Entfernen von in dem Kern eines Kernreaktors (14) erzeugter Zerfallswärme, wobei das Verfahren folgende Schritte aufweist
- Anschließen eines Kernkühlsystems (100) nach einem der Ansprüche 1 bis 4; und
- Zirkulieren eines Kühlmittels zwischen dem Reaktor (14) und dem Kernkühlsystem (100).

7. Verfahren nach Anspruch 6, umfassend die Beschränkung der Temperatur des zu der heißen Seite (108) des Rekuperators (106) geführten Kühlmittels auf eine vorbestimmte Maximaltemperatur.

8. Verfahren nach Anspruch 7, wobei die Beschränkung der Temperatur des zu der heißen Seite des Rekuperators geführten Kühlmittels das Mischen von heißem Kühlmittel aus dem Reaktor (14) mit kalten Kühlmittel vor dem Zuführen der Mischung zu der heißen Seite (108) des Rekuperators (106) umfasst.

9. Verfahren nach Anspruch 8, umfassend das Mischen des heißen Kühlmittels und des kalten Kühlmittels in einer Mischvorrichtung (30), wobei die Mischvorrichtung (30) aufweist:
eine Mischkammer (124), die von allgemein kugelförmiger Form ist; und
einen ersten Einlass (126), der mit dem Auslass (14.2) des Reaktors (14) verbunden ist und einen zweiten Einlass (128), der mit einem Auslass (112.2) des Wärmeübertragers (112) verbunden ist, der in die Mischkammer (124) führt, wobei die ersten und zweiten (126, 128) Einlässe rechtwinklig zueinander angeordnet sind und einen Auslass (130), der von der Mischkammer (124) wegführt und mit dem Einlass (108.1) der heißen Seite des Rekuperators (108) verbunden ist, wobei die Einlässe (126, 128) zu der Mitte der Mischkammer hin ausgerichtet sind und der Auslass (130) einem der Einlässe (126, 128) gegenüberliegend angeordnet ist.

## Revendications

1. Système (100) de conditionnement de noyau agencé pour éliminer la chaleur de décroissance générée dans le noyau d'un réacteur nucléaire (14) et agencé pour être relié en série avec ce dernier, le système (100) de conditionnement de noyau étant **caractérisé en ce qu'**il comprend au moins un récupérateur (106) présentant un côté chaud (108) qui est muni d'un orifice (108.1) d'entrée et d'un orifice (108.2) de sortie et un côté froid (110) qui est muni d'un orifice (110.1) d'entrée et d'un orifice (110.2) de sortie, l'orifice (108.1) d'entrée du côté chaud étant en communication fluidique avec un orifice (14.2) de sortie du réacteur (14) et l'orifice (110.2) de sortie du côté froid étant en communication fluidique avec un orifice (14.1) d'entrée du réacteur (14), et un échangeur thermique (112) relié de manière opérationnelle au récupérateur entre l'orifice (108.2) de sortie du côté chaud et l'orifice (110.1) d'entrée du côté froid.

2. Système de conditionnement de noyau selon la revendication 1, comprenant en outre un dispositif mélangeur (30) placé en amont du côté chaud (108) du récupérateur (106) par lequel un liquide de refroidissement chaud provenant du réacteur peut être mélangé avec un liquide de refroidissement froid, avant d'alimenter le récupérateur (106).

3. Système de conditionnement de noyau selon la revendication 2, dans lequel le dispositif mélangeur comprend:
- une chambre (124) de mélange qui est généralement de forme sphérique ;
- un premier orifice (126) d'entrée relié à l'orifice (14.2) de sortie du réacteur (14), et un deuxième orifice (128) d'entrée relié à un orifice (112.2) de sortie de l'échangeur thermique (112) conduisant à la chambre (124) de mélange, les premier et deuxième orifices (126, 128) d'entrée étant perpendiculaires l'un à l'autre, et un orifice (130) de sortie partant de la chambre (124) de mélange et étant relié à l'orifice (108.1) d'entrée du côté chaud du récupérateur (106), les orifices (126, 128) d'entrée étant dirigés vers le centre de la chambre de mélange et l'orifice (130) de sortie étant placé à l'opposé de l'un des orifices (126, 128) d'entrée
- le système (100) de conditionnement de noyau comprenant une soupape pour réguler le flux de liquide de refroidissement depuis l'orifice de sortie de l'échangeur thermique (112) jusqu'au dispositif mélangeur (30).

4. Système de conditionnement de noyau selon l'une des revendications 1 à 3, dans lequel le système de conditionnement de noyau comprend au moins deux ensembles (220) d'échangeurs thermiques reliés en parallèle.

5. Centrale nucléaire comprenant un système de conditionnement de noyau selon l'une des revendications 1 à 4, relié en série avec elle.

6. Procédé d'élimination de la chaleur de décroissance générée dans le noyau du réacteur nucléaire (14), lequel procédé consiste à
- relier un système (100) de conditionnement de noyau selon l'une des revendications 1 à 4 ; et
- faire circuler un liquide de refroidissement entre le réacteur (14) et le système (100) de conditionnement de noyau.

7. Procédé selon la revendication 6, qui consiste à limiter la température du liquide de refroidissement alimentant le côté chaud (108) du récupérateur (106) à une température maximum prédéterminée.

8. Procédé selon la revendication 7, dans lequel limiter la température d'un liquide de refroidissement alimentant le côté chaud du récupérateur consiste à mélanger un liquide de refroidissement chaud provenant du réacteur (14) avec un liquide de refroidissement froid avant d'alimenter le côté chaud (108) du récupérateur (106) avec le mélange.

9. Procédé selon la revendication 8, qui consiste à mélanger le liquide de refroidissement chaud et le liquide de refroidissement froid dans un dispositif mélangeur (30), le dispositif mélangeur (30) comprenant :
une chambre (124) de mélange qui est généralement de forme sphérique, et
un premier orifice (126) d'entrée relié à l'orifice (14.2) de sortie du réacteur (14), et un deuxième orifice (128) d'entrée relié à un orifice (112.2) de sortie de l'échangeur thermique (112) conduisant à la chambre (124) de mélange, les premier et deuxième orifices (126, 128) d'entrée étant perpendiculaires l'un à l'autre, et un orifice (130) de sortie partant de la chambre (124) de mélange et étant relié à l'orifice (108.1) d'entrée du côté chaud du récupérateur (108), les orifices (126, 128) d'entrée étant dirigés vers le centre de la chambre de mélange et l'orifice (130) de sortie étant placé à l'opposé de l'un des orifices (126, 128) d'entrée.
